# EUROPÄISCHE PATENTSCHRIFT

(11) **EP 2 186 490 B1**
(45) Veröffentlichungstag und Bekanntmachung des Hinweises auf die Patenterteilung: **16.04.2014**
(21) Anmeldenummer: 09013845.4
(22) Anmeldetag: 04.11.2009
(51) Int. Cl.: A61C 5/06, B05C 17/005

(54) **Dentalpatrone oder Dentalspritze für hoch- und geringviskose Dentalkomposite**
Dental cartridge or dental syringe for high and low viscosity dental composites
Cartouche dentaire ou seringue dentaire pour composites dentaires très visqueux ou peu visqueux

(30) Priorität: 14.11.2008 DE 102008057443
(43) Veröffentlichungstag der Anmeldung: 19.05.2010
(73) Patentinhaber: Heraeus Kulzer GmbH, 63450 Hanau (DE)
(72) Erfinder: Vocke, Lutz, 61350 Bad Homburg (DE)
(74) Vertreter: Bendele, Tanja

(56) Entgegenhaltungen:
- EP-A2- 1 842 787
- WO-A1-99/18880
- US-A1- 2006 013 637

## Beschreibung

Die Erfindung betrifft Ausgestaltungen einer Dentalpatrone oder Dentalspritze für hoch- und geringviskose Dentalkomposite.

Dentalpatronen bzw. Compulen zum Lagern und Ausbringen viskoser Materialien sind bekannt. Sie passen häufig zu entsprechenden Applikatorpistolen, oder sie sind mit einem Kolben zum Ausdrücken verbunden (sog. Dentalspritzen). Das Material wird dabei jeweils mit Kolbendruck ausgebracht. Typische Beispiele solcher Vorrichtungen sind (WO-A-9918880, EP-A-1842787,US 6,899,537 B2, US 5,489,207, US 5,267,859, US 5,199,567 und US 5,122,057 zu entnehmen. Die Patronen/Compulen sind häufig als zylindrische Vorratskammer mit einem Rüssel zum Ausbringen gestaltet. Der Rüssel trägt einen Deckel. An der dem Rüssel gegenüberliegenden Seite befindet sich ein beweglicher Kolben, der die Kapsel auf dieser Seite verschließt und das Ausbringen mit einem Applikatorstempel gestattet.

Handelt es sich um Material mittlerer oder geringer Viskosität, so kann es nach einem Applikationsschritt zu unerwünschtem Nachtropfen oder zum Auslaufen des Materials kommen. Es wurde daher vorgeschlagen, den Fluss mit einem Ventil zu regeln, das der Kapsel vorgeschaltet ist (WO-A-9918880, EP-A-1842787, WO03340472A1). In US 6,972,008 B2 ist ein Ventil vorgesehen, das in Ein/Aus-Position zu schalten ist, je nachdem, ob Materialfluss gewünscht ist oder nicht.

Aufgabe gegenüber dem Stand der Technik ist es, eine einzige Kapsel als universelle Konstruktionsplattform für verschiedene Produktarten und Darreichungsformen zur Verfügung zu stellen. Dahinter steckt das Ziel, die Verpackungsvielfalt zu vermindern. Die Zielsetzung ist, eine Compule bzw. Dentalspritze zu entwickeln, die an der Austrittsöffnung so verschlossen werden kann, dass auch geringviskose Dentalkomposite nicht aus- bzw. nachlaufen können. Das ergibt ein Packmittel, mit dem zwei oder mehrere Produkte mit unterschiedlichen Eigenschaften abgefüllt werden können.

Erfindungsgemäß wird demnach eine Dentalpatrone oder -spritze gemäß Anspruch 1 vorgeschlagen. Weitere vorteilhafte Ausgestaltungen sind den abhängigen Ansprüchen zu entnehmen.

In der Praxis wird in die Ausstoßöffnung der Patrone ein Kunststoffventil eingefügt und mittels eines an sich bekannten Fügeverfahrens verbunden (z.B. Ultraschall- oder Laserverschweißung) oder direkt im Spritzgußherstellprozess (2-Komponenten-Spritzguß) eingespritzt.

Man kann auch marktübliche Patronen oder Dentalspritzen mit einem fertigen Ventilteil ausstatten. Das kann als zusätzlicher Schritt zum Herstellprozess erfolgen oder an geeigneter Stelle des Herstellverfahrens kann ein zweites Kunststoffteil mitverarbeitet werden. Als derartige Ventile kommen an sich bekannte in Frage, wie sie beispielsweise von der Firma "minivalve" angeboten werden. Varianten sind Schnabelventile, Schirmventile oder kombinierte Ausführungen davon, ferner Kreuzschlitzventile.

Die Vorteile der erfindungsgemäßen Patrone bzw. Spritze sind:
Reduktion des Verpackungsaufwands und der eingesetzten Verpackungsvielfalt bei Dentalpatronen bzw. -spritzen (Die Abfüllung von hoch- u. geringviskosen Produkten ist an einer Abfüllanlage möglich, ein Packmittel kann für mehrere Produkte verwendet werden, die Abfüllung kann direkt beim Produzenten des Patronen- oder Spritzeninhalts erfolgen und muss nicht an Lohnabpacker herausgegeben werden.)

Dem Anwender wird eine bessere Dosierbarkeit geboten, da mit dem Abbruch des Auspressvorgangs die Austrittsöffnung sofort verschlossen wird.

Weiterhin ergeben sich zusätzliche Qualitäts- und Hygienevorteile: Der Behälter ist auch bei mehrmaligen Anwendungen nach dem vorhergegangenen Auspressvorgang wieder komplett verschlossen, auch wenn der Anwender die Patrone/Dentalspritze nicht mit der vorgesehenen Kappe verschließt. Durch den Einsatz des Ventils innerhalb der Austrittsdüse oder -kanüle wird weiterhin die Gefahr des Aushärtens durch Lichteinfall reduziert.

Erfindungsgemäße Patronen eignen sich besonders für dentale Kompositmaterialien.

### Abbildungen

Fig. 1 zeigt eine Ausführung der Erfindung als Dentalpatrone/Compule.
Fig. 2 zeigt eine Ausführung der Erfindung als Dentalspritze.
Fig. 3 stellt eine Detailansicht aus Fig. 2 dar.

### Beispielhafte Ausführungsformen

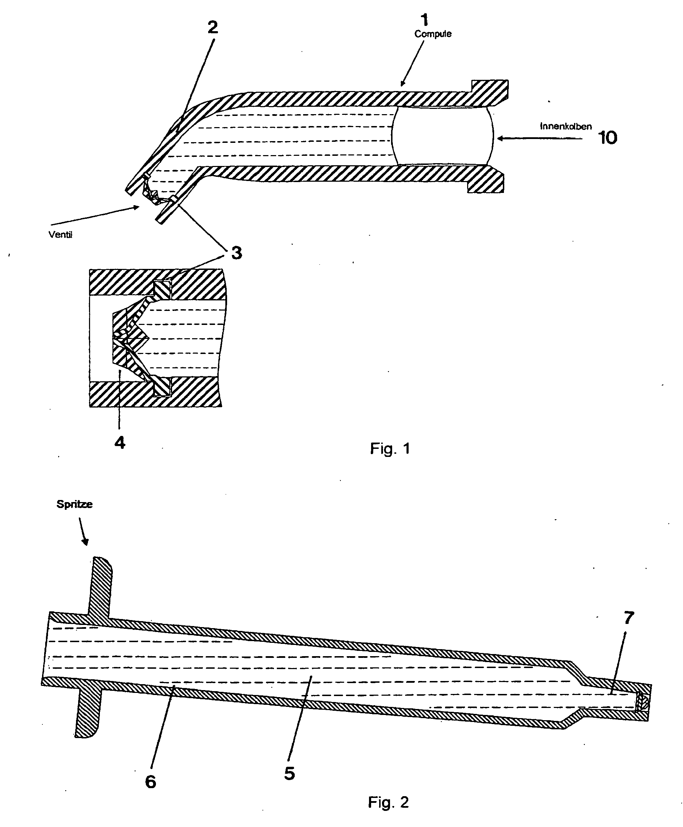

Gemäß Figur 1 ist an der Innenwand des Rüssels 2 einer herkömmlich gestalteten Dentalpatrone 1 eine ringförmige Ausnehmung 3 vorgesehen, die als Aufnahme für das Ventilteil 4 dient, das in der Aufnahme einrastet.

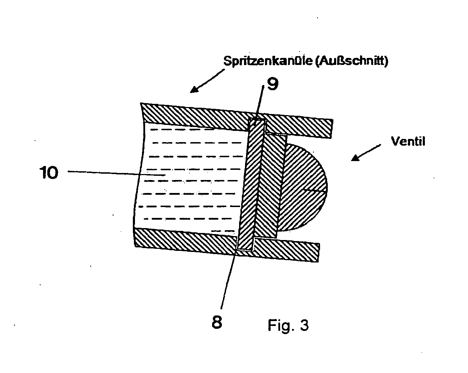

In den Figuren 2 und 3 ist die Ausführungsform einer Dentalspritze 5 mit Kolben 6 dargestellt. Deren Kanüle 7 weist an der Innenwand eine ringförmige Ausnehmung 8 auf, die als Aufnahme für das Ventil 9 dient.

Figur 3 zeigt im Detail die Anordnung des Ventils innerhalb der Kanüle.

## Patentansprüche

1. Dentalpatrone (1) oder Dentalspritze (5) für hoch- und geringviskose Dentalkomposite, aufweisend:
eine im Wesentlichen zylindrische Kammer (10) zur Aufnahme fließfähigen Dentalmaterials mit einem proximalen und einem distalen Ende,
einen beweglichen Kolbenverschluss am proximalen Ende der Kammer,
eine Austrittsöffnung am distalen Ende der Kammer, die in einen Rüssel (2) oder eine Kanüle (7) mündet,
wobei in den Rüssel (2) oder der Kanüle (7) eine Ventilvorrichtung (4/9) formschlüssig eingepasst ist, **dadurch gekennzeichnet, dass** die Innenwand des Rüssels (2) oder der Kanüle (7) eine ringförmige Ausnehmung (3/8) aufweist, in die die Ventilvorrichtung (4/9) formschlüssig eingepasst ist.

2. Dentalpatrone oder Dentalspritze nach Anspruch 1, **dadurch gekennzeichnet, dass** es sich bei der Ventilvorrichtung (4/9) um ein Schnabelventil, Schirmventil oder eine Kombination beider, oder um ein Kreuzschlitzventil handelt.

## Claims

1. A dental cartridge (1) or dental syringe (5) for high and low viscous dental
composites, comprising:
an essentially cylindrical chamber (10) for receiving flowable dental material with a proximal end and a distal end,
a movable piston closure at the proximal end of the chamber,
an outlet opening on the distal end of the chamber, which opens into a snout (2) or a cannula (7), wherein
a valve device (4/9) fits in a form-fitting manner into the snout (2) or the cannula (7),
**characterized in that** the inside wall of the snout (2) or of the cannula (7) has an annular recess (3/8), into which the valve device (4/9) fits in a form-fitting manner.

2. Dental cartridge (1) or dental syringe (5) according to claim 1,
**characterized in that**
the valve device (4/9) is a duckbill valve or a check valve, a shield valve or a combination of the two, or a cross-slit valve.

## Revendications

1. Cartouche dentaire (1) ou seringue dentaire (5) pour composites dentaires
fortement et faiblement visqueux, présentant :
une chambre sensiblement cylindrique (10) destinée à recevoir des matériaux dentaires fluides et comportant une extrémité proximale et une extrémité distale,
un fermoir à piston mobile à l'extrémité proximale de la chambre,
un orifice de sortie à l'extrémité distale de la chambre, lequel orifice débouche dans une trompe (2) ou une canule (7),
un dispositif de soupape (4/9) étant ajusté en correspondance géométrique dans la trompe (2) ou la canule (7),
**caractérisée en ce que** la paroi intérieure de la trompe (2) ou de la canule (7) présente une échancrure de forme annulaire (3/8) dans laquelle le dispositif de soupape (4/9) est ajusté en correspondance géométrique.

2. Cartouche dentaire ou seringue dentaire selon la revendication 1, **caractérisé en ce que** le dispositif de soupape (4/9) est une soupape à bec, une soupape de protection ou une combinaison des deux ou une soupape à fente en croix.
